# EUROPÄISCHE PATENTSCHRIFT

(11) **EP 0 730 726 B1**
(45) Veröffentlichungstag und Bekanntmachung des Hinweises auf die Patenterteilung: **03.02.1999**
(21) Anmeldenummer: 95901347.5
(22) Anmeldetag: 24.11.1994
(51) Int. Cl.: G01C 21/20, G07B 15/00

(54) **VERFAHREN ZUR ERZEUGUNG EINER DIGITALISIERTEN STRASSENNETZKARTE**
PROCESS FOR PRODUCING A DIGITISED ROAD MAP
PROCEDE DE REALISATION D'UNE CARTE ROUTIERE NUMERISEE

(30) Priorität: 26.11.1993 DE 4340840
(43) Veröffentlichungstag der Anmeldung: 11.09.1996
(73) Patentinhaber: MANNESMANN Aktiengesellschaft, 40213 Düsseldorf (DE)
(72) Erfinder: WIDL, Andreas, D-81667 München (DE); GINZINGER, Peter, D-83224 Grassau (DE)
(74) Vertreter: Meissner, Peter E., Dipl.-Ing.
(86) Internationale Anmeldenummer: DE9401431
(87) Internationale Veröffentlichungsnummer: WO9514910

(56) Entgegenhaltungen:
- EP-A- 0 394 517
- WO-A-88/09916
- DE-A- 3 609 288
- US-A- 4 760 531
- US-A- 4 924 402
- PATENT ABSTRACTS OF JAPAN vol. 8, no. 18 (P-250) (1455) 26. Januar 1984 & JP,A,58 178 214 (MITSUBISHI) 19. Oktober 1983

## Beschreibung

Die Erfindung betrifft ein Verfahren zur Erzeugung einer digitalisierten Straßennetzkarte, insbesondere zur Verwendung in einem Straßennutzungsgebührenabrechnungssystem, wobei der Straßenverlauf jeweils im Sinne eines angenäherten Polygonzugs anhand einer Folge von Bestimmungspunkten definiert wird, die durch ihre Koordinaten (Latitude, Longitude) festgelegt und durch Geraden miteinander verbunden sind.

In der nicht vorveröffentlichten DE 43 10 099 Al ist eine Einrichtung beschrieben, die von einem Fahrzeug mitgeführt werden kann und zur Abrechnung von Straßennutzungsgebühren (z.B. Autobahnmaut) einsetzbar ist. Diese Einrichtung weist in einer bevorzugten Ausführungsform ein Empfangssystem auf für den drahtlosen Empfang von Signalen, insbesondere von Signalen für die Satellitennavigation, eine Recheneinrichtung, die zur Bestimmung der aktuellen geografischen Fahrzeugposition aus diesen Daten eingerichtet ist, ferner eine Speichereinrichtung für die digitale Speicherung des nutzungsgebührenpflichtigen Straßennetzes sowie eine Speichereinrichtung für die digitale Speicherung von Fahrzeugpositionsdaten und Speichereinrichtungen für Angaben zum Straßennutzungstarif sowie für die wertmäßige Verbuchung der von der Recheneinrichtung ermittelten Nutzungsdaten. Die Recheneinrichtung kann dabei anhand des fortlaufenden Vergleichs der Positionsdaten des Fahrzeugs mit den geografischen Daten des Wegstreckenverlaufs innerhalb des gebührenpflichtigen Straßennetzes ermitteln, welche Streckenabschnitte dieses Straßennetzes vom Fahrzeug benutzt wurden.

Die Angaben über die aktuelle Fahrzeugposition werden durch die entsprechenden Koordinaten (Latitude, Longitude) dieser Position eindeutig festgelegt. In entsprechender Weise liegen auch die Angaben über den Verlauf des gebührenpflichtigen Straßennetzes vor. Das bedeutet, daß das Straßennetz durch eine Vielzahl von geografischen Punkten, die gedanklich durch gerade Linien miteinander verbunden sind, in Form eines Polygonzugs als näherungsweises Modell im Speicher der Einrichtung festgelegt ist. Der Polygonzug entspricht dabei etwa dem Verlauf der Mittellinie der einzelnen Straßen im nutzungsgebührenpflichtigen Straßennetz.

Auch im Rahmen von Zielführungssystemen, die ein Fahrzeug zu beliebigen vorgegebenen geografischen Zielen lotsen, werden digitalisierte Straßenkarten benötigt. Wenn das Gebiet, dessen einzelne Straßen in digitalisierter Form gespeichert werden sollen, sehr groß ist, wächst die Zahl der zu speichernden Daten stark an und erfordert ein entsprechend großes Speichervolumen. Ein hoher Speicherbedarf ist nicht nur wegen der damit einhergehenden höheren Kosten nachteilig, sondern ist auch deswegen unerwünscht, weil die erforderliche Verarbeitung dieser Daten entsprechend aufwendiger und langsamer wird.

Aus der WO 88/09916 ist ein Verfahren und eine Vorrichtung zur Positionsbestimmung eines Landfahrzeuges bekannt, bei dem Kreuzungen die Punkte des digitalisierten Straßennetzwerkes darstellen, wobei der Straßenverlauf zwischen den Kreuzungen so aus Geraden zusammengesetzt wird, daß Abweichungen des resultierenden Graphen vom tatsächlichen Straßenverlauf bestimmte Grenzwerte nicht überschreiten. Bei einem weiteren Fahrzeugnavigationssystem gemäß der EP-A1-0 394 517, werden die Straßenabschnitte als Koordinaten und deren Radien erfaßt.
Schließlich ist es aus der US-A- 4 760 531 bekannt, die Route in einzelne gerade Abschnitte zu zerlegen, die dann speicherbar sind.

Die Aufgabe der Erfindung besteht daher darin, ein Verfahren anzugeben, das es ermöglicht, eine digitalisierte Straßennetzkarte anhand des tatsächlichen Straßenverlaufs so zu erzeugen, daß sich mit möglichst wenigen Daten durch Erfassung einzelner geografischer Punkte der Straßen ein vergleichsweise genaues als Polygonzug angenähertes Abbild des tatsächlichen Straßenverlaufs ergibt.

Gelöst wird diese Aufgabe für ein gattungsgemäßes Verfahren mit den kennzeichnenden Merkmalen des Patentanspruchs 1. Vorteilhafte Weiterbildungen der Erfindung sind in den Unteransprüchen 2 bis 8 angegeben.

Nachfolgend wird die Erfindung anhand der Fig. 1 bis 6, die sich auf das Beispiel eines gebührenpflichtigen Autobahnnetzes beziehen, näher erläutert. Es zeigen:
- Fig. 1: einen Ausschnitt aus einem Autobahnnetz,
- Fig. 2: ein Punktmodell des Autobahnabschnitts aus Fig. 1 mit äquidistanten Punkten,
- Fig. 3 bis 5: Prinzipbilder zur Auswahl der den Straßenverlauf festlegenden Punkte und
- Fig. 6: ein erfindungsgemäßes Punktmodell des Autobahnabschnitts gemäß Fig. 1.

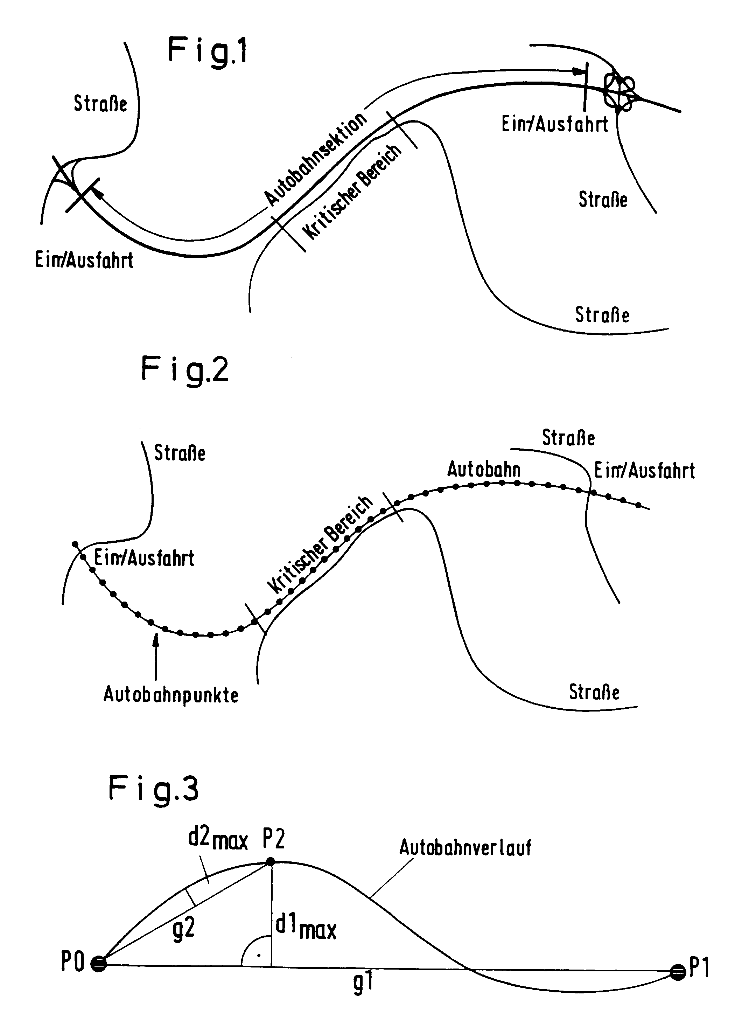

In Fig. 1 ist eine Teilstrecke einer Autobahn als Beispiel für den straßennutzungsgebührenpflichten Teil eines Straßennetzes dargestellt. Die Autobahnteilstrecke stellt ein zusammenhängendes Teilstück zwischen zwei unmittelbar aufeinanderfolgenden Verzweigungen der Autobahn dar und wird im folgenden auch als Sektion bezeichnet. Als Verzweigungen in diesem Sinne werden nicht nur die Orte von Autobahnkreuzen oder Autobahndreiecken, sondern auch die Orte von Ein- und Ausfahrten einer Autobahnsektion angesehen, wie sie in Fig. 1 angedeutet sind. Die im Unterschied zur Autobahnsektion als dünnere Linie angedeuteten Straßen, über die die Ein-/Ausfahrten erreicht werden können, gehören zum nicht gebührenpflichtigen Teil des Straßennetzes und müssen eindeutig von den Autobahnsektionen unterscheidbar sein.

Schwierig ist dies beispielsweise in dem Teilbereich der in Fig. 1 dargestellten Autobahnsektion, der als "kritischer Bereich" bezeichnet ist und in dem eine nicht gebührenpflichtige Straße über eine größere Strecke in sehr geringem Abstand zur Autobahnsektion verläuft. Wenn das Positionsbestimmungssystem eines in diesem kritischen Bereich befindlichen Fahrzeugs beispielsweise mit einem GPS-Empfänger (GLOBAL POSITIONING SYSTEM) für die Satellitennavigation ausgerüstet ist, weisen die ermittelten Positionsdaten üblicherweise eine Genauigkeit von etwa 100 m mit 95 % Wahrscheinlichkeit auf. Wenn daher der Abstand zwischen der Autobahn und der gebührenfreien Straße unterhalb dieser Genauigkeit liegt, kann das Positionsbestimmungssystem keine sichere Aussage darüber machen, auf welcher der beiden parallellaufenden Straßen sich das Fahrzeug gerade befindet. Ähnliche Schwierigkeiten treten an Orten auf, an denen die Satellitensignale zur Positionsbestimmung z.B. an Gebäuden reflektiert und dadurch stark verzerrt werden oder wo überhaupt kein Signalempfang möglich ist (z.B. Tunnelstrecken). Auch Raststätten und Parkplätze, die unter Umständen relativ weit ab vom eigentlichen Fahrbahnverlauf liegen, können als "kritische Bereiche" angesehen werden, da ein in diesem Bereich festgestelltes Fahrzeug scheinbar den Streckenverlauf verlassen hat.

Die Erfindung sieht vor, die in die digitalisierte Straßennetzkarte aufzunehmenden Straßenzüge in disjunkte Sektionen aufzuteilen, die jeweils von zwei unmittelbar aufeinanderfolgenden Verzweigungen begrenzt sind. Das bedeutet, daß innerhalb der Sektion keine Möglichkeit besteht, von einer anderen Straße in diese Sektion einzufahren oder die Sektion zu verlassen. Zur Festlegung des Verlaufs der Sektion wäre es naheliegend, die Koordinaten äquidistanter Punkte des Straßenverlaufs, wie dies in Fig. 2 dargestellt ist, in die digitalisierte Straßenbeschreibung aufzunehmen. Die einzelnen Punkte können durch gerade Verbindungslinien zu einem Polygonzug weitergebildet werden, der den tatsächlichen Straßenverlauf als Näherungsmodell entspricht. Die Verwendung äquidistanter Punkte würde aber entweder zu einer unerwünscht hohen Anzahl an zu speichernden Informationen führen, wenn eine hohe Genauigkeit verlangt wird, oder einen erheblichen Verlust an Genauigkeit mit sich bringen, wenn die Anzahl der gespeicherten Punkte wesentlich vermindert wird. Die Erfindung schlägt zur Lösung dieser Problematik eine Vorgehensweise vor, die entsprechend den jeweiligen örtlichen Gegebenheiten zu einer flexiblen Auswahl der zur eindeutigen Charakterisierung des Straßenverlaufs erforderlichen Punkte führt.

Hierzu werden zunächst der gespeicherte Anfangspunkt P0 und der Endpunkt P1 als Bestimmungspunkte einer Sektion so festgelegt, daß beide eindeutig innerhalb des tatsächlichen Bereichs der jeweiligen Sektion liegen, d. h. beide Bestimmungspunkte P0 und P1 liegen um einen vorgegebenen Mindestabstand vom exakten Ort der die Sektion begrenzenden beiden Verzweigungen entfernt. Der gespeicherte Endpunkt einer Sektion ist also nie identisch mit dem gespeicherten Anfangspunkt der unmittelbar anschließenden Sektion. Die Größenordnung dieses Mindestabstandes richtet sich insbesondere nach der Genauigkeit des Positionsbestimmungssystems, dessen Ortsangaben z.B. zur Ermittlung von Straßennutzungsgebühren mit der digitalisierten Straßennetzkarte verglichen werden sollen. Die typische Mindestentfernung liegt bei mindestens 50 m und kann nach oben auf etwa 1 km beschränkt werden. In besonderen Einzelfällen kann diese Mindestentfernung aber auch sogar auf mehrere Kilometer ausgedehnt werden. Die einer Verzweigung zugeordneten Bestimmungspunkte von zwei unmittelbar benachbarten Sektionen sollten voneinander mindestens nur den doppelten Betrag des möglichen Fehlers des eingesetzten Positionsbestimmungssystems entfernt liegen.

Fig. 3 zeigt den ersten Schritt des erfindungsgemäß anzuwendenden iterativen Verfahrens, mit dem die Festlegung weiterer Bestimmungspunkte des Straßenverlaufs der Sektion erfolgt. Die beiden Punkte P0 und P1 werden durch eine Gerade g1 miteinander verbunden, und es wird der Punkt des tatsächlichen Straßenverlaufs (Mittellinie) ermittelt, dessen senkrechter Abstand zur Geraden gl maximal ist. In Fig. 3 weist der Punkt P2 den Maximalabstand d1 ₘₐₓ auf und wird als weiterer Bestimmungspunkt ausgewählt, wenn dieser Maximalabstand über einem vorgegebenen Schwellenwert liegt.

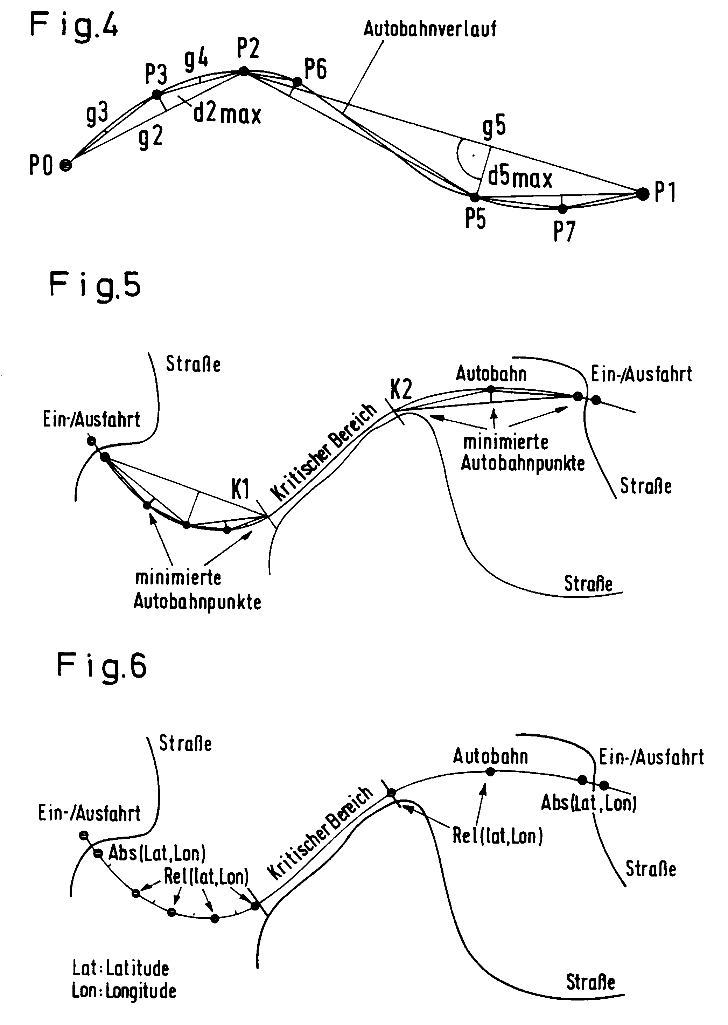

Wenn letzteres der Fall ist, wird im nächsten Schritt des iterativen Verfahrens der Verlauf zwischen den Punkten P0 und P2 in gleicher Weise behandelt. Die beide Punkte verbindende Gerade g2 hat den maximalen senkrechten Abstand d2 ₘₐₓ, was zur Festlegung des weiteren Bestimmungspunktes P3 führt (Fig. 4), da d2 ₘₐₓ ebenfalls noch über dem Schwellenwert liegt. Danach wird der Streckenverlauf zwischen P0 und P3 ebenso untersucht. Als maximaler senkrechter Abstand ergibt sich für die Verbindungsgerade g3 nun aber ein Wert, der den vorgegebenen Schwellenwert nicht mehr übersteigt. In diesem Fall wird kein weiterer Bestimmungspunkt zwischen P0 und P3 ermittelt, sondern es wird das an P3 anschließende Stück des Straßenverlaufs untersucht, also zwischen P3 und P2 die Gerade g4 gelegt. Im Beispiel der Fig. 4 weist auch diese Gerade g4 keinen den Schwellenwert übersteigenden senkrechten Abstand vom tatsächlichen Straßenverlauf auf. Also wird auch hier kein weiterer Bestimmungspunkt festgelegt, sondern als nächstes der Verlauf zwischen den Bestimmungspunkten P2 und P1 untersucht. In entsprechender Weise wird sukzessive weiterverfahren, bis für den gesamten Verlauf zwischen dem Anfangspunkt P0 und dem Endpunkt P1 alle erforderlichen Bestimmungspunkte festgelegt sind. Im vorliegenden Beispiel führt das zu den Punkten P2 bis P7. Der durch die Bestimmungspunkte P0 bis P7 definierte Polygonzug nähert sich dem tatsächlichen Straßenverlauf mit einer hohen Genauigkeit an, d. h. die Abweichungen vom tatsächlichen Straßenverlauf sind stets geringer als der vorgegebene Schwellenwert. Letzterer sollte zweckmäßigerweise in einer Größenordnung liegen, die sich an der Genauigkeit des in Verbindung mit der digitalisierten Straßennetzkarte benutzten Positionsbestimmungssystems orientiert. Als günstiger Wert für ein GPS-System kann ein Wert von 10 bis 200 m, vorzugsweise von 30 bis 100 m angesehen werden. Ein größerer Schwellenwert vermindert zwar jeweils die Anzahl der Bestimmungspunkte, verschlechtert aber auf der anderen Seite die Genauigkeit der digitalen Straßennetzkarte.

In Fig. 5 ist dargestellt, wie das erfindungsgemäße Verfahren die Autobahnsektion aus dem Beispiel der Fig. 1 durch einen Polygonzug für die digitalisierte Straßennetzkarte annähert, wobei die Anzahl der Bestimmungspunkte auf ein Minimum reduziert ist. Die festgelegten Bestimmungspunkte sind in dieser Darstellung daher als "minimierte Autobahnpunkte" bezeichnet. Für den Fall einer Verwendung in einem Autobahngebührenabrechnungssystem ist der "kritische Bereich" zwischen den Punkten K1 und K2 ausgeklammert worden, da in diesem Fall eine gebührenfreie Straße etwa parallel zur Autobahn verläuft und der Abstand beider Straßen voneinander im wesentlichen unterhalb des Schwellenwertes liegt. Zwischen diesen beiden Punkten würde daher ein entsprechendes Autobahngebührenabrechnungssystem keine Untersuchungen anstellen, ob sich das Fahrzeug tatsächlich auf der nutzungsgebührenpflichtigen Autobahn befindet. Entsprechendes gilt, wenn, wie vorstehend beschrieben, aus anderen Gründen keine hinreichend genaue Aussage über eine noch andauemde Benutzung einer gebührenpflichtigen Straße machen kann (z.B. Benutzung eines abgelegenen Parkplatzes der Autobahn).

Um den Umfang der zu speichemden Daten der digitalisierten Straßennetzkarte möglichst klein zu halten, sieht die Erfindung in vorteilhafter Weise vor, daß lediglich jeweils der Anfangs- und/oder der Endpunkt einer Sektion mit ihren absoluten Koordinaten (Bezeichnung: Abs (Lat, Lon)) als absolute Bestimmungspunkte gespeichert werden, während die dazwischenliegenden Bestimmungspunkte nur mit ihren relativen Koordinaten zum Anfangs- oder Endpunkt festgelegt sind, wie dies wiederum für das Beispiel aus Fig. 1 in Fig. 6 dargestellt ist. Es empfiehlt sich, die relativen Koordinaten (Bezeichnung: Rel (Lat, Lon)) in Form des Datentyps Integer zu speichern.

Bei einer Autobahnsektion kann es gelegentlich vorkommen, daß die beiden in entgegengesetzter Richtung verlaufenden Fahrbahnen unterschiedliche Verläufe aufweisen, daß beispielsweise die eine Richtungsfahrbahn auf der westlichen Seite eines Berges verläuft, während die entgegengesetzte Richtungsfahrbahn auf der östlichen Seite um den Berg geführt ist. In einem solchen Fall können sogar die Ein/Ausfahrten für die verschiedenen Richtungsfahrbahnen an unterschiedlichen Orten liegen. Insbesondere bei solchen Verhältnissen bietet es sich an, lediglich die Einfahrtstellen der Richtungsfahrbahnen jeweils als absolute Bestimmungspunkte und die den Ausfahrten zugeordneten Bestimmungspunkte nur mit den auf die Einfahrtstelle bezogenen relativen Koordinaten zu speichern.

Für das Autobahnnetz der Bundesrepublik Deutschland ergeben sich beispielsweise etwa 4600 absolute Bestimmungspunkte, wenn jeweils zwei absolute Bestimmungspunkte zu einer Sektion festgelegt wurden. Zu diesen absoluten Bestimmungspunkten können weitere Einträge in die digitalisierte Straßennetzkarte aufgenommen werden, insbesondere eine Straßenidentifikationsnummer (z.B. A 555 zur Kennzeichnung der Autobahn 555), Angaben zur Streckenlänge der jeweiligen Sektion und auch Angaben über "kritische Bereiche" zwischen den relativen Bestimmungspunkten.

Um die Suche der absoluten Bestimmungspunkte der digitalisierten Straßennetzkarte bei der Identifizierung eines vom Positionsbestimmungssystem des Fahrzeugs ermittelten Ortes der aktuellen Fahrzeugposition zu erleichtern und den dafür erforderlichen Rechenaufwand möglichst klein zu halten, also eine schnelle Antwort zu ermöglichen, empfiehlt es sich, die absoluten Bestimmungspunkte nach einer der beiden Koordinaten (z.B. nach der Latitude) in der Reihenfolge ihrer Größe zu ordnen und in dieser Weise zu speichern.

## Patentansprüche

1. Verfahren zur Erzeugung einer digitalisierten Straßennetzkarte, insbesondere zur Verwendung in einem Straßennutzungsgebührenabrechnungssystem, wobei der Straßenverlauf jeweils im Sinne eines angenäherten Polygonzugs anhand einer Folge von Bestimmungspunkten definiert wird, die durch ihre Koordinaten, wie z.B. Latitude, Longitude, festgelegt und durch Geraden (g) miteinander verbunden sind, wobei jede in die Straßennetzkarte aufzunehmende Straße in disjunkte Sektionen, die jeweils das zusammenhängende Teilstück der Straße zwischen zwei unmittelbar aufeinanderfolgenden Verzweigungen, wie z.B. Einfahrten, Ausfahrten, Abzweigungen, Straßenkreuze, der Straße repräsentieren, aufgeteilt wird,
dadurch gekennzeichnet,
- daß die Koordinaten der die Sektion begrenzenden Verzweigungen als Bestimmungspunkte, wie z.B. Anfangs- und Endpunkt der Sektion (PO;P1), gespeichert werden mit der Maßgabe, daß sich der Anfangspunkt (PO) einer Sektion und der Endpunkt (P1) der unmittelbar vorhergehenden Sektion um eine vorgegebene Mindestentfernung innerhalb der jeweiligen Sektion vom exakten Ort der Verzweigung unterscheiden, und
- daß weitere Bestimmungspunkte (P3,P4,P..) gespeichert werden, die zwischen dem Anfangspunkt und dem Endpunkt der Sektion liegen und durch ein iteratives Verfahren wie folgt ausgewählt werden:
a) Es wird die Stelle im tatsächlichen Straßenverlauf zwischen zwei unmittelbar benachbarten Bestimmungspunkten ermittelt, an der der senkrechte Abstand von der durch diese beiden Bestimmungspunkte definierten Geraden (g) ein Maximum darstellt.
b) Wenn dieses Maximum einen vorgegebenen Schwellenwert übersteigt, wird dieser Ort des tatsächlichen Straßenverlaufs als neuer zusätzlicher Bestimmungspunkt gespeichert. Danach wird Schritt a) erneut ausgeführt unter Einbeziehung des neuen Bestimmungspunktes.
c) Wenn das festgelegte Minimum den vorgegebenen Schwellenwert nicht übersteigt, wird zwischen den betrachteten Bestimmungspunkten kein neuer Bestimmungspunkt festgelegt, sondern das nächste Stück des Polygonzugs entsprechend Schritt a) untersucht, bis die ganze Sektion abgearbeitet ist.

2. Verfahren nach Anspruch 1,
dadurch gekennzeichnet,
daß die Anfangs- und/oder Endpunkte einer Sektion jeweils mit ihren absoluten Koordinaten als absolute Bestimmungspunkte und die dazwischenliegenden Bestimmungspunkte als relative Bestimmungspunkte jeweils mit ihren relativen Koordinaten zum Anfangs- bzw. Endpunkt gespeichert werden.

3. Verfahren nach Anspruche 1 oder 2,
dadurch gekennzeichnet,
daß "kritische Bereiche" nur mit ihrem Anfangs- und ihrem Endpunkt (K1,K2) gespeichert werden.

4. Verfahren nach Anspruch 2 oder 3,
dadurch gekennzeichnet,
daß zu den absoluten Bestimmungspunkten weitere Einträge, insbesondere eine Straßenidentifikationsnummer, die Länge der jeweiligen Sektion und/oder Informationen über Parkplätze, Ratstätten und "kritische Bereiche" zwischen den relativen Bestimmungspunkten, gespeichert werden.

5. Verfahren nach einem der Ansprüche 2 bis 4,
dadurch gekennzeichnet,
daß die relativen Koordinaten in Form des Datentyps INTEGER gespeichert werden.

6. Verfahren nach einem der Ansprüche 2 bis 5,
dadurch gekennzeichnet,
daß die absoluten Bestimmungspunkte in geordneter Reihenfolge, insbesondere entweder sortiert nach Latitude oder nach Longitude, gespeichert werden.

7. Verfahren nach einem der Anspruche 1 bis 6
dadurch gekennzeichnet,
daß die vorgegebene Mindestenffernung im Bereich von 50 m bis zu etwa 1 km liegt.

8. Verfahren nach einem der Ansprüche 1 bis 7,
dadurch gekennzeichnet,
daß der vorgegebene Schwellenwert im Bereich von 10 bis 200 m, insbesondere von 30 bis 100 m liegt.

## Claims

1. Method of generating a digitalised street network plan, in particular for use in a street toll calculating system, wherein the street path is defined according to an approximately polygonal progression with the aid of a sequence of determining points, which are established by their coordinates, such as for example latitude, longitude, and are joined together by straight lines (g), wherein each street to be comprised in the street network plan is divided into disjunctive sections, respectively representing the connected road section of the street between two directly consecutive branches, e.g. turnings in and out, branches, crossroads, of the street, characterised in that
■ the coordinates of the branches defining the section are stored as determining points, e.g. such as beginning and end points of the section (P0; P1) with the proviso that the beginning point (P0) of a section and the end point (P1) of the immediately preceding section differ by a predetermined minimum distance within the section from the exact site of the branch, and
■ in that further determining points (P3, P4, P..) are stored, which lie between the beginning point and the end point of the section and are selected as follows by an iterative method:
a) The site in the actual street path between two immediately adjacent determining points is determined, at which the perpendicular distance from the straight line (g) defined by these two determining points represents a maximum.
b) If this maximum exceeds a predetermined threshold value, this site of the actual street path is stored as a new additional determining point. Thereafter, step a) is carried out again, including the new determining point.
c) If the established minimum does not exceed the predetermined threshold value, between the observed determining points no new determining point is set, but the next section of the polygonal progression correspondingly to step a) is examined until the whole section has been worked off.

2. Method according to claim 1, characterised in that the beginning and/or end points of a section are stored respectively with their absolute coordinates as absolute determining points, and the determining points in between are stored as relative determining points respectively with their relative coordinates for the beginning or end point.

3. Method according to claim 1 or 2, characterised in that the "critical regions" are only stored with their beginning and end point (K1, K2).

4. Method according to claim 2 or 3, characterised in that at the absolute determining points further entries, in particular a street identification number, the length of the respective section and/or data about parking places, advice centres and "critical regions" between the relative determining points are stored.

5. Method according to one of claims 2 to 4, characterised in that the relative coordinates are stored in the form of the data type INTEGER.

6. Method according to one of claims 2 to 5, characterised in that the absolute determining points are stored in ordered sequence, in particular sorted according to either latitude or longitude.

7. Method according to one of claims 1 to 6, characterised in that the predetermined minimum distance is in the range of 50 m to 1 km.

8. Method according to one of claims 1 to 7, characterised in that the predetermined threshold value lies in the range from 10 to 200 m, in particular from 30 to 100m.

## Revendications

1. Procédé pour engendrer une carte numérisée d'un réseau routier, en particulier pour l'utilisation dans un système de décompte de péage routier, le tracé routier étant à chaque fois défini sous forme d'un tracé polygonal approximatif à partir d'une suite de points de détermination qui sont déterminés par leurs coordonnées, comme par exemple la latitude, la longitude, et sont reliés ensemble par des droites (g), chaque route devant être indiquée sur la carte de réseau routier étant divisée dans des sections disjointes qui représentent à chaque fois la partie partielle de liaison de la route entre deux ramifications de la route directement successives, comme par exemple des entrées, des sorties, des bifurcations, des croisements de route,
caractérisé
- en ce que les coordonnées des ramifications délimitant la section sont enregistrées comme points de détermination, comme par exemple les points de début et de fin de la section (P0 ; P1), avec la caractéristique que le point de début (P0) d'une section et le point de fin (P1) de la section directement précédente se différencient, d'une distance minimale prédéfinie, à l'intérieur de la section, de l'endroit exact de la ramification, et
- en ce que d'autres points de détermination (P3, P4, P...) sont enregistres, points qui sont situés ente le point de début et le point de fin de la section et sont choisis par un procédé itératif comme suit :
a) on détermine l'endroit dans le tracé effectif de la route entre deux points de détermination directement adjacents, où la distance orthogonale par rapport à la droite (g) définie par ces deux points de détermination présente un maximum,
b) lorsque ce maximum dépasse une valeur de seuil prédéfinie, on enregistre cet endroit du tracé de route effectif comme nouveau point de détermination supplémentaire ; ensuite on répète l'étape a) en tenant compte de ce nouveau point de détermination,
c) lorsque le minimum fixé ne dépasse pas la valeur de seuil prédéfinie, on ne fixe aucun nouveau point de détermination entre les points de détermination considérés, mais la partie suivante du tracé polygonal est vérifiée conformément à l'étape a) jusqu'à ce que toute la section soit traitée.

2. Procédé selon la revendication 1,
caractérisé en ce que les points de début et/ou de fin d'une section sont enregistrés à chaque fois avec leurs coordonnées absolues comme points de détermination absolus et les points de détermination situés entre eux sont enregistrés à chaque fois comme points de détermination relatifs avec leurs coordonnées relatives par rapport respectivement au point de début et au point de fin.

3. Procédé selon l'une des revendications 1 ou 2,
caractérisé en ce que des « zones critiques » sont enregistrées uniquement avec leurs points de début et de fin (K1, K2).

4. Procédé selon l'une des revendications 2 ou 3,
caractérisé en ce que l'on enregistre avec les points de détermination absolus d'autres éléments, en particulier un numéro d'identification de la route, la longueur de la section correspondante et/ou des informations sur des parkings, des zones de repos et des « zones critiques » entre les points de détermination relatifs.

5. Procédé selon l'une des revendications 2 à 4,
caractérisé en ce que les coordonnées relatives sont stockées sous forme du type de données INTEGER.

6. Procédé selon l'une des revendications 2 à 5,
caractérisé en ce que les points de détermination absolus sont stockés dans une suite ordonnée, en particulier en étant sélectionnés selon la latitude ou selon la longitude.

7. Procédé selon l'une des revendications 1 à 6,
caractérisé en ce que la distance minimale prédéfinie est située entre 50 m et à peu près 1 km.

8. Procédé selon l'une des revendications 1 à 7,
caractérisé en ce que la valeur de seuil prédéfinie est située entre 10 et 200 m, en particulier entre 30 et 100 m.
